# FASCICULE DE BREVET EUROPEEN

(11) **EP 2 856 041 B1**
(45) Date de publication et mention de la délivrance du brevet: **13.07.2016**
(21) Numéro de dépôt: 13731373.0
(22) Date de dépôt: 28.05.2013
(51) Int. Cl.: F25B 27/00, H02K 7/18, F24H 4/04, F24D 17/02, F24D 17/00, F28D 20/02, F28D 20/00

(54) **INSTALLATION DE TRANSFORMATION D'ÉNERGIE THERMIQUE**
ANLAGE ZUR UMWANDLUNG VON WÄRMEENERGIE
FACILITY FOR TRANSFORMING HEAT ENERGY

(30) Priorité: 29.05.2012 FR 1254916
(43) Date de publication de la demande: 08.04.2015
(73) Titulaire: Li-Mithra Engineering, 88390 Uxegney (FR)
(72) Inventeur: TORRENT, Pierre Yves, F-88150 Thaon Les Vosges (FR)
(74) Mandataire: Rhein, Alain
(86) Numéro de dépôt international: PCT/FR2013/051188
(87) Numéro de publication internationale: WO 2013/178938

(56) Documents cités:
- EP-A2- 1 067 342
- WO-A2-2010/128222
- DE-A1- 10 043 533
- DE-A1-102006 057 846
- DE-U1-202008 017 601
- FR-A1- 2 963 646
- GB-A- 2 455 773

## Description

### Domaine technique et état de l'art

L'invention propose une installation pour transformer notamment en énergie électrique, une énergie thermique captée par une pompe à chaleur. L'invention est particulièrement intéressante lorsque la source d'énergie thermique est très fluctuante dans le temps, par exemple lorsque la source d'énergie thermique est un panneau solaire thermique.

Une installation de captage d'énergie solaire thermique comprenant une pompe à chaleur est notamment décrite dans la demande FR n°11/59075. Coupler une pompe à chaleur à un panneau solaire thermique permet d'augmenter sensiblement le rendement du panneau solaire thermique. Toutefois demeure l'un des inconvénients d'un panneau solaire thermique, à savoir l'irrégularité de la source d'énergie thermique, en fonction du moment de la journée, des saisons, de l'orientation du panneau, etc.

Le document GB 2 455 773 A divulgue le préambule de la revendication 1.

### Description de l'invention

L'invention propose une nouvelle installation, pour une production régulière d'énergie électrique à partir d'une source d'énergie thermique.

Plus précisément, l'invention propose une installation de transformation d'énergie thermique, comprenant :
- un dispositif de stockage d'énergie comprenant :
   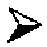 une cuve de fluide caloporteur dite cuve FC contenant un fluide caloporteur dit fluide FC dans une phase gazeuse sous pression,
   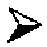 une cuve MCP contenant un matériau à changement de phase dit matériau MCP, la cuve MCP et la cuve FC étant positionnées l'une par rapport à l'autre pour permettre un transfert d'énergie thermique entre le matériau MCP et le fluide FC
- un premier générateur électrique relié à la cuve FC par une voie aller et une voie de retour de fluide, le générateur étant adapté pour produire une énergie électrique à partir d'une énergie cinétique du fluide gazeux sous pression,
- une pompe à chaleur, adaptée pour transférer de l'énergie thermique d'une source froide au dispositif de stockage d'énergie afin de chauffer le fluide FC contenu dans la cuve FC et / ou fournir de l'énergie au matériau MCP.

L'énergie électrique produite par le générateur est :
- fournie à un compresseur de la pompe à chaleur, et / ou
- stockée dans un accumulateur électrique.

Le premier générateur électrique est par exemple un turbogénérateur, comprenant une turbine et un alternateur associés en série : il produit de l'énergie électrique à partir de l'énergie cinétique libérée par la détente du fluide caloporteur en phase gazeuse sous pression. Le fluide retourne en suite sous une forme liquide à la cuve FC. La pompe à chaleur extrait de l'énergie thermique de la source froide et la transfère au dispositif de stockage d'énergie pour chauffer et vaporiser le fluide FC. La cuve FC stocke ainsi l'énergie thermique fournie par la source froide, et absorbe les fluctuations d'énergie de la source froide. Le premier générateur électrique fournit quant à une lui une énergie électrique régulée par une régulation du débit et / ou de la pression du fluide gazeux en sortie de la cuve FC. Le fluide FC fourni au premier générateur électrique est de préférence un fluide FC dont la température de vaporisation est de l'ordre de 10 à 70°C, température facilement obtenue à partir d'une pompe à chaleur. Dans un exemple, le fluide FC est de l'éthanol, fluide courant, peu cher et aisé à manipuler.

Dans l'installation selon l'invention, le dispositif de stockage d'énergie peut encore comprendre un premier élément échangeur de chaleur, par exemple un serpentin, positionné dans ou autour de la cuve MCP et dont une entrée et une sortie sont reliées respectivement à une sortie et une entrée d'un secondaire de la pompe à chaleur.

Le stockage d'énergie dans la cuve FC est limité par le fait que stocker un fluide gazeux nécessite une cuve d'un volume important ou une pression importante. L'utilisation d'une cuve MCP en complément, permet de stocker bien plus d'énergie, en particulier si un matériau MCP de type solide/liquide est utilisé car le changement de phase ne nécessite pas ou peu de volume supplémentaire, et aucune pression n'est nécessaire. Des essais ont montré que l'utilisation d'une cuve MCP permet la production d'énergie électrique pendant plusieurs jours, y compris lorsque l'énergie thermique de la source froide est très faible. De préférence, le matériau MCP présente une température de fusion comprise entre 50 et 70°C : une telle température est facilement accessible à partir d'une pompe à chaleur, elle est suffisante pour chauffer le fluide FC ou de l'eau sanitaire, et il n'est pas nécessaire d'utiliser des équipements résistants à des contraintes thermiques fortes. Dans un exemple, le matériau MCP est de l'acétate de sodium trihydraté (CH3COONa).

Dans l'installation selon l'invention, le dispositif de stockage d'énergie peut comprendre également une cuve d'eau chaude sanitaire dite cuve ECS, la cuve MCP et la cuve ECS étant positionnées l'une par rapport à l'autre pour permettre un transfert d'énergie thermique entre le matériau MCP et l'eau contenue dans la cuve ECS. En plus de l'énergie électrique, l'installation selon l'invention produit également de l'eau chaude sanitaire, qui est disponible pour la consommation bien sûr, mais qui sert aussi indirectement pour le stockage de l'énergie thermique.

Dans le dispositif de stockage d'énergie :
- la cuve FC est positionnée à l'intérieur de la cuve MCP, le matériau MCP remplissant l'espace entre la cuve MCP et la cuve FC de sorte que le matériau MCP est en contact avec une paroi de la cuve FC, ou
- la paroi de la cuve de fluide est positionnée au contact d'une paroi de la cuve MCP.

Ceci permet un transfert d'énergie thermique optimum entre la cuve MCP et la cuve FC. De la même façon, et pour les mêmes raisons :
- la cuve ECS est positionnée à l'intérieur de la cuve MCP ; le premier élément échangeur de chaleur, de type serpentin, est enroulé dans l'espace entre la cuve MCP et la cuve ECS ; et le matériau MCP remplit l'espace entre la cuve MCP et la cuve ECS, ou
- la cuve FC est positionnée au dessus de la cuve MCP, la paroi de la cuve FC et la paroi de la cuve MCP étant en contact.

Dans un mode de réalisation préféré, la cuve FC et la cuve MCP sont enfermées ensemble dans un caisson isotherme. L'ensemble peut ainsi être aisément déplacé et installé en un lieu approprié, dans ou à côté d'un bâtiment, y compris par une personne non spécialiste de ce type d'installation.

De préférence, l'installation selon l'invention comprend également un deuxième élément échangeur de chaleur positionné au voisinage de la voie de retour de fluide du générateur électrique vers la cuve FC et relié à une entrée de la pompe à chaleur, pour transférer une énergie résiduelle du fluide sortant du générateur à l'entrée de la pompe à chaleur. On utilise ainsi au mieux l'énergie thermique disponible à l'intérieur de l'installation.

De manière connue, la pompe à chaleur utilisée dans l'installation selon l'invention comprend, en série le long d'un circuit fermé de fluide frigorigène :
- un évaporateur adapté à vaporiser le fluide frigorigène à partir d'une énergie prélevée à la source froide,
- un compresseur adapté à compresser le fluide frigorigène gazeux,
- un condenseur adapté à liquéfier le fluide frigorigène gazeux pour fournir une énergie au dispositif de stockage d'énergie,
- un détendeur pour abaisser une pression du fluide frigorigène liquéfié.

Selon un mode de mise en oeuvre, le détendeur est un deuxième générateur électrique adapté à transformer en énergie électrique l'énergie mécanique libérée par l'abaissement de la pression du fluide frigorigène liquéfié. Ainsi, on récupère et on réutilise l'énergie thermique habituellement perdue dans le détendeur pour produire de l'énergie électrique qui est ensuite fournie au compresseur et / ou stockée dans un accumulateur électrique.

En complément, un circuit de chauffage thermique, incluant par exemple un plancher chauffant ou tout autre dispositif approprié pour la diffusion de chaleur, peut être branché sur le secondaire en sortie de la pompe à chaleur, en parallèle du dispositif de stockage d'énergie.

L'installation selon l'invention est notamment intéressante lorsqu'elle est reliée à une source froide de type panneau solaire thermique, particulièrement fluctuante dans le temps. Des essais ont montré que, correctement dimensionnée et régulée, une telle installation pouvait fournir aisément et rendre autonome en électricité, en eau chaude et en chauffage un bâtiment d'habitation (maison particulière ou petit immeuble collectif) ou un bâtiment professionnel jusqu'à environ 10000 m2 de surface.

### Brève description des figures

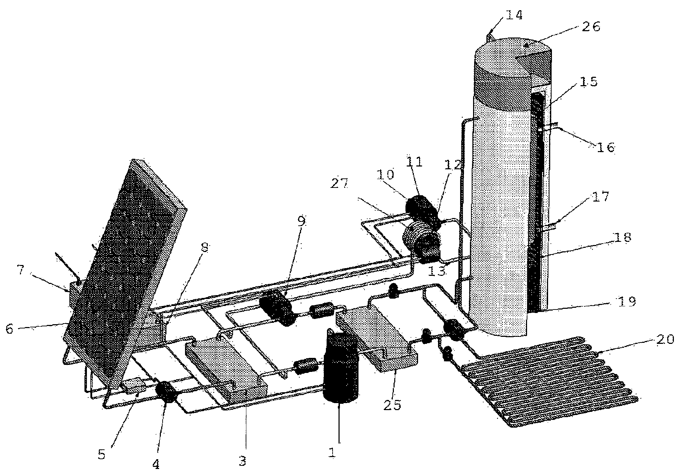

L'invention sera mieux comprise, et d'autres caractéristiques et avantages de l'invention apparaîtront à la lumière de la description qui suit d'un exemple de réalisation d'une installation selon l'invention. Cet exemple est donné à titre non limitatif. La description est à lire en relation avec le dessin annexé dans lequel la figure unique est un schéma de principe d'une installation selon l'invention, dans sa version la plus optimisée.

### Description d'un mode de réalisation de l'invention

Les éléments essentiels de l'installation selon l'invention sont :
- un dispositif de stockage d'énergie comprenant une cuve 26 de fluide caloporteur dite cuve FC contenant un fluide FC (essais réalisés avec de l'éthanol) dans une phase gazeuse sous pression,
- un premier générateur électrique 11 relié à la cuve FC par une voie aller 14 et une voie de retour 13 de fluide,
- une pompe à chaleur, adaptée pour transférer de l'énergie thermique d'une source froide au dispositif de stockage d'énergie afin de chauffer le fluide FC contenu dans la cuve FC.

Le générateur électrique 11 est de type turbogénérateur, comprenant de manière connue une turbine et un alternateur associés en série pour produire une énergie électrique à partir d'une énergie cinétique du fluide gazeux sous pression. En sortie du générateur 11, le fluide détendu est refroidi et condensé dans un condenseur 10, puis retourné sous forme liquide à la cuve FC par la voie de retour 13 de fluide par une pompe 12.

L'entrée de la pompe à chaleur est reliée à la sortie d'un panneau solaire thermique 6 par un circuit primaire fermé contenant un fluide caloporteur approprié. Un régulateur de charge 5 commande une pompe de circulation 4 pour optimiser le débit de fluide dans le circuit primaire et ainsi optimiser le rendement du panneau solaire et de l'installation complète.

De manière connue également, la pompe à chaleur comprend, en série le long d'un circuit fermé de fluide frigorigène :
- un évaporateur 3 adapté à vaporiser le fluide frigorigène à partir d'une énergie prélevée à la source froide, l'évaporateur formant un primaire de la pompe à chaleur,
- un compresseur 1 adapté à compresser le fluide frigorigène gazeux,
- un condenseur 25 adapté à liquéfier le fluide frigorigène gazeux pour fournir une énergie au dispositif de stockage d'énergie, le condenseur formant un secondaire de la pompe à chaleur,
- un détendeur 9 pour abaisser une pression du fluide frigorigène liquéfié,

Dans le cadre de l'installation représentée, le détendeur est un deuxième générateur électrique, de type turbogénérateur adapté à transformer en énergie électrique l'énergie mécanique libérée par l'abaissement de la pression du fluide frigorigène liquéfié. Egalement, l'évaporateur 3 et le condenseur 25 sont choisis de préférence de type échangeurs à ailettes pour leur facilité d'installation.

L'énergie électrique produite par le premier et / ou le deuxième générateur, en fonction que la quantité d'énergie électrique disponible est fournie au compresseur 1 de la pompe à chaleur, et / ou stockée dans un accumulateur électrique 8. De préférence, l'énergie est stockée dans l'accumulateur 8 à une haute tension, par exemple 400V et, en sortie de l'accumulateur 8 un onduleur 7 adapte la tension en fonction de la charge électrique aval.

Dans l'exemple représenté, en complément de la cuve FC, le dispositif de stockage d'énergie comprend également :
- une cuve MCP 19 contenant un matériau à changement de phase dit matériau MCP, la cuve FC est positionnée au dessus de la cuve MCP et le contact entre les deux cuves permet un transfert d'énergie thermique entre le matériau MCP et le fluide FC,
- une cuve 15 d'eau chaude sanitaire dite cuve ECS, la cuve ECS est positionnée à l'intérieur de la cuve MCP pour permettre un transfert d'énergie thermique entre le matériau MCP et l'eau contenue dans la cuve ECS,
- un serpentin 18 enroulé dans l'espace entre la cuve MCP et la cuve ECS.

Le serpentin 18 est relié au secondaire de la pompe à chaleur, en parallèle avec la cuve FC, pour recevoir de l'énergie de la pompe à chaleur, énergie qui sera transférée au matériau MCP.

La cuve FC et la cuve MCP sont enfermées ensemble dans un caisson isotherme (non représenté par souci de clarté), et le matériau MCP remplit l'espace entre la cuve MCP et la cuve ECS 15. Dans l'installation mise en oeuvre, le matériau MCP utilisé est de l'acétate de sodium tri-hydraté (CH3COONa).

Le matériau MCP accumule l'énergie thermique qu'il reçoit de la pompe à chaleur en se liquéfiant. Puis le matériau MCP restitue cette chaleur pour partie au fluide FC et pour partie à l'eau chaude sanitaire en se solidifiant.

L'installation comprend encore un deuxième serpentin 27 positionné au voisinage de la voie de retour 13 de fluide du générateur électrique vers la cuve FC, plus précisément autour d'un dispositif 12 de récupération du fluide FC condensé en sortie du turbogénérateur 11. Le serpentin est relié à une entrée de la pompe à chaleur, plus précisément en parallèle sur l'évaporateur 3, entre la sortie du détendeur 9 et l'entrée du compresseur 1, pour transférer une énergie résiduelle du fluide sortant du générateur à l'entrée de la pompe à chaleur.

Dans l'exemple représenté également, un dispositif de dissipation d'énergie 20, de type plancher chauffant, est également connecté sur le secondaire de la pompe à chaleur, en parallèle du dispositif de stockage d'énergie. Il permet de chauffer l'air ambiant d'un bâtiment.

La cuve FC, la cuve MPC et le dispositif de dissipation de l'énergie sont tous reliés au secondaire de la pompe à chaleur, en parallèles les uns des autres par un réseau de tuyauterie approprié intégrant des vannes à débit variable permettant de varier le débit d'un fluide caloporteur dans tout ou partie du réseau.

Les vannes sont de préférence commandables à distance, et un moyen de commande est prévu pour commander l'ouverture ou la fermeture de chaque vanne indépendamment l'une de l'autre de sorte à optimiser le rendement de l'ensemble de l'installation en continu, en alimentant en énergie la cuve FC, la cuve MCP et / ou le dispositif de dissipation d'énergie, en fonction notamment de, à un instant donné :
- l'énergie disponible à la source froide,
- l'énergie nécessaire pour faire fonctionner le dispositif de dissipation d'énergie, par exemple, si le dispositif de dissipation est un plancher chauffant dans une habitation, la régulation du débit des vannes est optimisée en fonction d'une température mesurée à l'intérieure de l'habitation par rapport à une température souhaitée,
- une température souhaitée dans la cuve ECS,
- une pression mesurée dans la cuve FC, par rapport à une pression souhaitée,
- la quantité d'énergie disponible dans la cuve MCP par rapport à sa capacité maximale de stockage,
- de priorités données à un consommateur d'énergie (cuve FC, cuve ECS, dispositif de dissipation, etc.) par rapport aux autres, en fonction du jour, de l'heure, de la météo, etc.

## Revendications

1. Installation de transformation d'énergie thermique, installation comprenant :
• un dispositif de stockage d'énergie comprenant une cuve (26) de fluide caloporteur dite cuve FC contenant un fluide FC dans une phase gazeuse sous pression,
• un premier générateur électrique (11) relié à la cuve FC par une voie aller (14) de fluide, le générateur étant adapté pour produire une énergie électrique à partir d'une énergie cinétique du fluide gazeux sous pression,
• une pompe à chaleur, adaptée pour transférer de l'énergie thermique d'une source froide au dispositif de stockage d'énergie afin de chauffer le fluide FC contenu dans la cuve FC et / ou de fournir de l'énergie au matériau MCP,
l'installation étant **caractérisée en ce que** ledit dispositif de stockage comprend une cuve MCP (19) contenant un matériau à changement de phase dit matériau MCP, la cuve MCP et la cuve FC étant positionnées l'une par rapport à l'autre pour permettre un transfert d'énergie thermique entre le matériau MCP et le fluide FC, et ledit premier générateur électrique (11) étant relié à la cuve FC par une voie de retour (13).

2. Installation selon la revendication 1, dans laquelle le dispositif de stockage d'énergie comprend également un premier élément échangeur de chaleur, par exemple un serpentin (18), positionné dans ou autour de la cuve MCP et dont une entrée et une sortie sont reliées respectivement à une sortie et une entrée d'un secondaire de la pompe à chaleur pour recevoir de l'énergie thermique de la pompe à chaleur.

3. Installation selon la revendication 2, dans laquelle le dispositif de stockage d'énergie comprend également une cuve d'eau chaude sanitaire dite cuve ECS (15), la cuve MCP et la cuve ECS étant positionnées l'une par rapport à l'autre pour permettre un transfert d'énergie thermique entre le matériau MCP et l'eau contenue dans la cuve ECS.

4. Installation selon la revendication 3 dans laquelle :
• la cuve ECS (15) est positionnée à l'intérieur de la cuve MCP (19) ; le premier élément échangeur de chaleur, de type serpentin (18), est enroulé dans l'espace entre la cuve MCP et la cuve ECS ; et le matériau MCP remplit l'espace entre la cuve MCP et la cuve ECS,
• la cuve FC (26) est positionnée au dessus de la cuve MCP, la paroi de la cuve FC et la paroi de la cuve MCP étant en contact, et
• la cuve FC et la cuve MCP sont enfermées ensemble dans un caisson isotherme.

5. Installation selon la revendication 2 ou 3 dans laquelle, dans le dispositif de stockage d'énergie :
• la cuve FC est positionnée à l'intérieur de la cuve MCP, le matériau MCP remplissant l'espace entre la cuve MCP et la cuve FC de sorte que le matériau MCP est en contact avec une paroi de la cuve FC, ou
• la paroi de la cuve FC est positionnée au contact d'une paroi de la cuve MCP.

6. Installation selon l'une des revendications 2 à 5, comprenant également un deuxième élément échangeur (27) de chaleur positionné au voisinage de la voie de retour (13) de fluide du générateur électrique (11) vers la cuve FC (26) et relié à une entrée de la pompe à chaleur, pour transférer une énergie résiduelle du fluide sortant du générateur à l'entrée de la pompe à chaleur.

7. Installation selon l'une des revendications précédentes, dans laquelle l'énergie électrique produite par le générateur électrique (11) est :
• fournie à un compresseur (1) de la pompe à chaleur, et / ou
• stockée dans un accumulateur électrique (8).

8. Installation selon l'une des revendications précédentes dans laquelle la pompe à chaleur comprend, en série le long d'un circuit fermé de fluide frigorigène :
• un évaporateur (3) adapté à vaporiser le fluide frigorigène à partir d'une énergie prélevée à la source froide (6), l'évaporateur formant un primaire de la pompe à chaleur,
• un compresseur (1) adapté à compresser le fluide frigorigène gazeux,
• un condenseur (25) adapté à liquéfier le fluide frigorigène gazeux pour fournir une énergie au dispositif de stockage d'énergie, le condenseur formant un secondaire de la pompe à chaleur,
• un détendeur (9) pour abaisser une pression du fluide frigorigène liquéfié,
et dans lequel le détendeur est un deuxième générateur électrique adapté à transformer en énergie électrique l'énergie mécanique libérée par l'abaissement de la pression du fluide frigorigène liquéfié.

9. Installation selon la revendication précédente, dans lequel l'énergie électrique produite par le détendeur est :
• fournie au compresseur (1) ou
• stockée dans un accumulateur électrique (8).

10. Installation selon l'une des revendications précédentes dans laquelle le fluide fourni au premier générateur électrique est de l'éthanol.

11. Installation selon l'une des revendications 2 à 9 dans laquelle le matériau MCP présente une température de fusion comprise entre 50 et 70°C.

12. Installation selon la revendication 10 dans laquelle le matériau MCP est de l'acétate de sodium tri-hydraté (CH3COONa).

13. Installation selon l'une des revendications précédentes, dans laquelle le primaire de la pompe à chaleur est relié un panneau solaire thermique.

## Patentansprüche

1. Anlage zur thermischen Energieumwandlung, welche Anlage Folgendes umfasst:
• eine Energiespeichervorrichtung, die einen als FC-Behälter bezeichneten Wärmeträgermedium-Behälter (26) umfasst, der ein FC-Medium in einer unter Druck stehenden Gasphase enthält,
• einen ersten elektrischen Generator (11), der über einen Vorwärtskanal (14) für das Medium mit dem FC-Behälter verbunden ist, wobei der Generator geeignet ist, um ab einer kinetischer Energie des unter Druck stehenden gasförmigen Mediums elektrische Energie zu erzeugen,
• eine Wärmepumpe, die geeignet ist, um Wärmeenergie von einer Kältequelle zu der Energiespeichervorrichtung zu übertragen, um das in dem FC-Behälter enthaltene FC-Medium aufzuheizen und/oder um Energie an das MCP-Material und einen Rücklaufkanal (13) zu liefern,
wobei die Anlage **dadurch gekennzeichnet ist, dass** die besagte Speichervorrichtung einen MCP-Behälter (19) umfasst, der ein als MCP-Material bezeichnetes Phasenänderungsmaterial enthält, wobei der MCP-Behälter und der FC-Behälter so relativ zu zueinander positioniert sind, dass eine Wärmeenergieübertragung zwischen dem MCP-Material und dem FC-Behälter ermöglicht wird, und wobei der besagte erste elektrische Generator (11) über einen Rücklaufkanal (13) mit dem FC-Behälter verbunden ist.

2. Anlage nach Anspruch 1, bei der die Energiespeichervorrichtung auch ein erstes Wärmeaustauschelement, beispielsweise eine Heizschlange (18), aufweist, das in oder um dem MCP-Behälter positioniert ist und von dem ein Eingang und ein Ausgang jeweils mit einem Ausgang und einem Eingang eines Sekundärteils der Wärmepumpe verbunden sind, um Wärmeenergie von der Wärmepumpe zu erhalten.

3. Anlage nach Anspruch 2, bei der die Energiespeichervorrichtung auch einen als ECS-Behälter (15) bezeichneten Heißwasserbehälter umfasst, wobei der MCP-Behälter und der Heißwasserbehälter so relativ zu einander positioniert sind, dass eine Wärmeenergieübertragung zwischen dem MCP-Material und dem in dem Heißwasserbehälter enthaltenen Wasser ermöglicht wird.

4. Anlage nach Anspruch 3, bei der:
• der Heißwasserbehälter (15) innerhalb des MCP-Behälters (19) positioniert ist; das erste Wärmeaustauschelement, der Art Heizschlange (18), in den Raum zwischen dem MCP-Behälter und dem ECS-Behälter aufgewickelt ist; und das MCP-Material den Raum zwischen dem MCP-Behälter und dem ECS-Behälter füllt,
• der FC-Behälter (26) über dem MCP-Behälter positioniert ist, wobei die Wand des FC-Behälters und die Wand des MCP-Behälters in Berührung stehen, und
• der FC-Behälter und der MCP-Behälter zusammen in einem isothermischen Kasten eingeschlossen sind.

5. Anlaghe nach Anspruch 2 oder 3, bei der in der Energiespeichereinrichtung:
• der FC-Behälter innerhalb des MCP-Behälters positioniert ist, wobei das MCP-Material den Raum zwischen dem MCP-Behälter und dem FC-Behälter füllt, so dass das MPC-Material mit einer Wand des FC-Behälters in Berührung steht, oder
• die Wand des FC-Behälters in Berührung mit einer Wand des MCP-Behälters positioniert ist.

6. Anlage nach einem der Ansprüche 2 bis 5, umfassend auch ein zweites Wärmeübertragungselement (27), das in der Nähe des Rücklaufkanals (13) des Mediums von dem elektrischen Generator (11) zu dem FC-Behälter (26) positioniert und mit einem Einlass der Wärmepumpe verbunden ist, um eine Restenergie des aus dem Generator austretenden Mediums zu dem Einlass der Wärmepumpe zu übertragen.

7. Anlage nach einem der vorhergehenden Ansprüche, bei der die von dem elektrischen Generator (11) erzeugte elektrische Energie:
• an einen Kompressor (1) der Wärmepumpe, und/oder
• in einem elektrischen Akkumulator (8) gespeichert wird.

8. Anlage nach einem der vorhergehenden Ansprüche, bei der die Wärmepumpe in Reihe entlang einer geschlossenen Kältemittelkreislauf Folgendes umfasst:
• einen Verdampfer (3), der geeignet ist, das Kühlmittel ab einer von der Kältequelle (6) entnommenen Energie zu verdampfen, wobei der Verdampfer einen Primärteil der Wärmepumpe bildet,
• einen Verdichter (1), der geeignet ist, das gasförmige Kältemittel zu verdichten,
• einen Kondensator (25), der geeignet ist, das gasförmige Kältemittel zu verflüssigen, um Energie an die Energiespeichervorrichtung zu liefern, wobei der Kondensator einen Sekundärteil der Wärmepumpe bildet,
• einen Expander (9), um einen Druck des verflüssigten Kältemittels zu senken,
und bei der der Expander ein zweiter elektrischer Generator ist, der geeignet ist, um die durch das Senken des Drucks des verflüssigten Kältemittels freigegebene mechanische Energie in elektrische Energie umzuwandeln.

9. Anlage nach dem vorhergehenden Anspruch, bei der die von dem Expander erzeugte elektrische Energie:
• an den Kompressor (1) geliefert, oder
• in einem elektrischen Akkumulator (8) gespeichert wird.

10. Anlage nach einem der vorhergehenden Ansprüche, bei der das an den ersten elektrischen Generator gelieferte Medium Ethanol ist.

11. Anlage nach einem der Ansprüche 2 bis 9, bei der das MCP-Material eine Schmelztemperatur zwischen 50 und 70°C aufweist

12. Anlage nach Anspruch 10, bei der das MCP-Material Natriumacetat-Trihydrat (CH3COONa) ist.

13. Anlage nach einem der vorhergehenden Ansprüche, bei der der Primärteil der Wärmepumpe an einem solarthermischen Modul angeschlossen ist.

## Claims

1. Thermal energy transformation plant, which plant comprises:
• an energy storage device comprising a heat-transfer fluid vessel (26), referred to as FC vessel, containing a FC fluid in a pressurized gaseous phase,
• a first electrical generator (11) connected to the FC vessel through a fluid forward channel (14), the generator being adapted for producing electrical energy from kinetic energy of the pressurized gaseous fluid,
• a heat pump adapted for transferring thermal energy from a cold source to the energy storage device in order to warm the FC fluid contained in the FC vessel and/or to supply energy to the MCP material and a return channel (13),
the plant being **characterized in that** said storage device comprises a MCP vessel (19) containing a phase-change material, referred to as MCP material, the MCP vessel and the FC vessel being positioned relative to each other so as to permit a thermal energy transfer between the MCP material and the FC fluid, and said first electric generator (11) being connected to the FC vessel through a return channel (13).

2. Plant according to claim 1, wherein the energy storage device also comprises a first heat-exchange element, for example a coil (18), positioned in or around the MCP vessel and an input and an output of which are connected to an output and an input, respectively, of a secondary part of the heat pump to receive thermal energy from the heat pump.

3. Plant according to claim 2, wherein the energy storage device also comprises a hot-water vessel, referred to as ECS vessel (15), the MCP vessel and the ECS vessel being positioned relative to the other so as to permit a thermal energy transfer between the MCP material and the water contained in the ECS vessel.

4. Plant according to claim 3, wherein:
• the ECS vessel (15) is positioned inside the MCP vessel (19); the first heat-exchanger element, of the coil type (18), is wound in the space between the MCP vessel and the ECS vessel; and the MCP material fills the space between the MCP vessel and the ECS vessel,
• the FC vessel (26) is positioned above the MCP vessel, the wall of the FC vessel and the wall of the MCP vessel being into contact, and
• the FC vessel and the MCP vessel are enclosed together in an isothermal box.

5. Plant according to claim 2 or 3, wherein, in the energy storage device:
• the FC vessel is positioned inside the MCP vessel, the MCP material filling the space between the MCP vessel and the FC vessel so that the MCP material is into contact with a wall of the FC vessel, or
• the wall of the FC vessel is positioned into contact with a wall of the MCP vessel.

6. Plant according to one of claims 2 to 5, also comprising a second heat-exchange element (27) positioned in the vicinity of the fluid return channel (13) from the electric generator (11) to the FC vessel (26) and connected to an inlet of the heat pump, for transferring a residual energy of the fluid exiting from the generator to the inlet of the heat pump.

7. Plant according to one of the preceding claims, wherein the electrical energy produced by the electric generator (11) is:
• supplied to a compressor (1) of the heat pump, and/or
• stored in an electric accumulator (8).

8. Plant according to one of the preceding claims, wherein the heat pump comprises, in series along a closed refrigerant-fluid circuit:
• an evaporator (3) adapted for vaporizing the refrigerant fluid from an energy taken from the cold source (6), the evaporator forming a primary part of the heat pump,
• a compressor (1) adapted for compressing the gaseous refrigerant fluid,
• a condenser (25) adapted for liquefying the gaseous refrigerant fluid in order to supply an energy to the energy storage device, the condenser forming a secondary part of the heat pump,
• an expansion device (9) for lowering a pressure of the liquefied refrigerant fluid,
and wherein the expansion device is a second electrical generator adapted for converting into electric energy the mechanical energy released by lowering the pressure of the liquefied refrigerant fluid.

9. Plant according to the preceding claim, wherein the electrical energy produced by the expansion device is:
• supplied to the compressor (1) or
• stored in an electric accumulator (8).

10. Plant according to one of the preceding claims, wherein the fluid supplied to the first electric generator is ethanol.

11. Plant according to one of claims 2 to 9, wherein the MCP material has a melting temperature between 50 and 70°C.

12. Plant according to claim 10, wherein the MCP material is sodium acetate tri-hydrate (CH3COONa).

13. Plant according to one of the preceding claims, wherein the primary part of the heat pump is connected to a solar thermal panel.
